# EUROPEAN PATENT APPLICATION

(11) **EP 4 708 532 A1**
(43) Date of publication of application: **11.03.2026**
(21) Application number: 25752388.6
(22) Date of filing: 07.01.2025
(51) Int. Cl.: H01M 50/342, H01M 50/249

(54) **BATTERY MODULE, AND BATTERY PACK AND VEHICLE INCLUDING SAME**

(30) Priority: 06.02.2024 KR 20240018200
(71) Applicant: LG Energy Solution, Ltd., Seoul 07335 (KR)
(72) Inventor: PARK, Ju-Hun, Daejeon 34122 (KR); KIM, Kwang-Mo, Daejeon 34122 (KR); KIM, Soo-Youl, Daejeon 34122 (KR); JUNG, Hye-Mi, Daejeon 34122 (KR)
(74) Representative: Plasseraud IP
(86) International application number: PCT/KR2025/000292
(87) International publication number: WO 2025/170207

(57) **Abstract**

A battery module according to one embodiment of the present disclosure includes: a plurality of battery cells; a module casing that accommodates the plurality of battery cells, and having a first venting hole on one side surface, the first venting hole that discharges venting gas to outside; and a rupture member coupled to the module casing so as to cover the first venting hole from both sides, and that is at least partially ruptured by the venting gas.

## Description

### TECHNICAL FIELD

The present disclosure relates to a battery module, a battery pack, and vehicle including the same.

This application is based on and claims priority from Korean Patent Application No. 10-2024-0018200, filed on February 6, 2024, with the Korean Intellectual Property Office, the disclosure of which is incorporated herein in its entirety by reference.

### BACKGROUND ART

Secondary batteries, which have high applicability depending on product groups and electrical characteristics such as high energy density, are widely applied not only to portable devices but also to electric vehicles (EVs) or hybrid electric vehicles (HEVs) driven by electrical driving sources. Such a secondary battery has attracted attention as a new energy source for environmental friendliness and energy efficiency enhancement due to the fact that there are no by-products generated by the use of energy at all as well as a primary advantage that the use of fossil fuels can be drastically reduced.

Currently widely used types of secondary batteries include, for example, lithium ion batteries, lithium polymer batteries, nickel cadmium batteries, nickel hydrogen batteries, and nickel zinc batteries. When a high output voltage is required, battery cells may be connected in series to form a battery module or a battery pack. Also, in order to increase the charging/discharging capacity, battery cells may be connected in parallel to form a battery module or a battery pack. Therefore, the number of battery cells included in the battery module or the pack may be variously set depending on the required output voltage or charging/discharging capacity.

Battery cells undergo chemical reactions during charging/discharging. Thus, when the battery cells are used in an environment higher than an appropriate temperature, their performance may deteriorate. Then, when the heat control is not performed at an appropriate temperature, there is always a possibility of unexpected ignition or explosion. In addition, a battery module has a structure where these battery cells are tightly housed inside a module housing. Therefore, when a thermal event occurs in one battery cell, the discharged high-temperature gas and flame may be transferred to adjacent battery cells, causing a series of explosions in the battery cells. This is very dangerous.

The present disclosure provides a structure in which when a thermal runaway occurs in a battery module, high-temperature gas or flame generated inside the battery module can be discharged to the outside, thereby preventing or suppressing heat accumulation inside the battery module, and preventing or suppressing the discharged gas or flame from flowing back into the battery module. For example, the present disclosure provides a battery module in which in the event of an abnormal situation of a battery cell, high-temperature gas, flame, etc. generated from the battery cell can be smoothly discharged to the outside of the battery module so that the thermal runaway propagation between cells can be effectively prevented or delayed.

### DISCLOSURE

### Technical Problem

In one embodiment of the present disclosure, a battery module is provided in which when a thermal runaway occurs in the battery module, gas or flame generated inside the battery module may be smoothly discharged to the outside of the battery module, and thus the thermal runaway propagation between cells may be effectively prevented or delayed.

Also, in another embodiment of the present disclosure, provided is a battery module with improved safety and reliability, in which when a thermal runaway occurs in the battery module, gas or flame discharged to the outside of the battery module may be prevented from flowing back into the battery module.

The technical problems that the present disclosure seeks to solve are not limited to the above-mentioned problems, and other problems not mentioned above will be clearly understood by those skilled in the art from the description of the invention described below.

### Technical Solution

To solve the above problems, the present disclosure provides a battery module including: a plurality of battery cells; a module casing configured to accommodate the plurality of battery cells, and having a first venting hole on one side surface, the first venting hole being configured to discharge venting gas to outside; and a rupture member coupled to the module casing so as to cover the first venting hole from both sides, and configured to be at least partially ruptured by the venting gas.

The module casing may include: a case body having an open top side and configured to allow the plurality of battery cells to be seated thereon; and a top plate coupled to the open top side of the case body, in which the first venting hole is formed.

The rupture member may include: an outer member configured to cover the first venting hole from outside; and an inner member configured to cover the first venting hole from inside.

The rupture member may be configured in a sheet shape.

The rupture member may be configured to at least partially adhere to one side surface of the module casing.

The rupture member may include an opening portion formed at a location corresponding to the first venting hole, and configured to be ruptured by the venting gas.

The opening portion may include a notch configured to have a thin thickness.

The outer member and the inner member may include an outer opening portion and an inner opening portion, respectively, which are configured to be ruptured by the venting gas, and the outer opening portion and the inner opening portion may be configured to have different thresholds at which rupturing is caused by the venting gas.

The outer member and the inner member may be configured to be at least partially separated from each other.

The battery module may further include a fixing cover provided outside the rupture member and configured to fix the rupture member to the module casing.

In the fixing cover, a second venting hole may be formed at a location corresponding to the first venting hole and may be configured to discharge the venting gas to outside.

Also, the present disclosure provides a battery pack including the battery module according to the present disclosure.

Then, the present disclosure provides a vehicle including the battery module according to the present disclosure.

### Advantageous Effects

According to one aspect of the present disclosure, in the event of an abnormal situation of a battery cell, high-temperature gas, flame, etc. generated from the battery cell can be smoothly discharged to the outside of the battery module so that the thermal runaway propagation between cells can be effectively prevented or delayed.

Also, according to another aspect of the present disclosure, in an abnormal situation of a battery cell, high-temperature gas, flame, etc. generated from the battery cell may be prevented from flowing back into the battery module so that the safety and reliability of the battery module may be improved.

Also, according to a further aspect of the present disclosure, it is possible to prevent or delay events such as, for example, fire or explosion, which are caused by a thermal runaway phenomenon in a battery pack including a plurality of battery modules or a device equipped with these.

In addition, the present disclosure may have various other effects, which will be described in each embodiment, and then regarding effects that can be easily inferred by those skilled in the art, the corresponding explanations will be omitted.

### DESCRIPTION OF DRAWINGS

The following drawings attached hereto illustrate the embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is a schematic perspective view of a battery module according to one embodiment of the present disclosure.
FIG. 2 is an exploded perspective view of the battery module according to one embodiment of the present disclosure.
FIG. 3 is a cross-sectional view of the battery module according to one embodiment of the present disclosure.
FIG. 4 is a view illustrating that at least a part of a rupture member is opened when a thermal event occurs in the battery module according to one embodiment of the present disclosure.
FIG. 5 is a perspective view of the rupture member included in the battery module according to one embodiment of the present disclosure.
FIG. 6 is a view of the A part of FIG. 4 in an enlarged scale, which illustrates the rupture member provided above a battery cell where a thermal event has occurred in the battery module according to one embodiment of the present disclosure.
FIG. 7 is a perspective view of a rupture member included in a battery module according to another embodiment of the present disclosure.
FIG. 8 and FIG. 9 are views of the B part of FIG. 4 in an enlarged scale, which illustrate the rupture member provided above a battery cell where no thermal event has occurred in the battery module according to one embodiment of the present disclosure.
FIG. 10 and FIG. 11 are views for explaining a fixing cover of the battery module according to one embodiment of the present disclosure.
FIG. 12 is a schematic perspective view of a battery pack including the battery module according to one embodiment of the present disclosure.
FIG. 13 is a schematic perspective view of a vehicle including the battery pack according to one embodiment of the present disclosure.

### BEST MODE

Hereinafter, embodiments of the present disclosure will be described with reference to the attached drawings. Prior to this, the terms and words used in the specification and claims should not be construed as limited to their ordinary or dictionary meanings, but should be interpreted with meanings and concepts consistent with the technical idea of the present disclosure based on a principle that the inventor may appropriately define the concepts of terms in order to explain his or her invention in the best way.

Accordingly, since the embodiments described in this description and the configurations illustrated in the drawings are merely exemplary embodiments of the present disclosure, and do not represent all of the technical ideas of the present disclosure, it should be understood that there may be various equivalents and modifications that could serve as alternatives to the embodiments.

In addition, the present disclosure includes various embodiments. In the individual embodiments, duplicate descriptions of substantially identical or similar components will be omitted, and explanations will be focused on differences.

Meanwhile, although terms indicating directions such as up, down, left, right, front, and back may be used in the present disclosure, it is obvious to those skilled in the art of the present disclosure that these terms are only for convenience of explanation and may vary depending on the location of a target object, the location of an observer, etc.

For example, in the embodiment of the present disclosure, the X-axis direction, the Y-axis direction, and the Z-axis direction depicted in the drawings may mean the left-right direction, the front-rear direction perpendicular to the X-axis direction on the horizontal plane (*e.g.,* X-Y plane), and the up-down direction (*e.g.,* vertical direction) perpendicular to both the X-axis direction and the Y-axis direction, respectively.

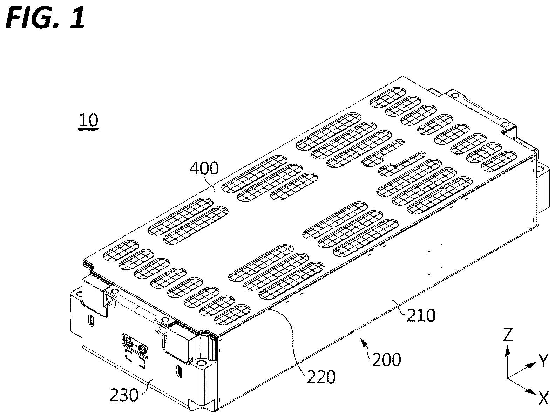

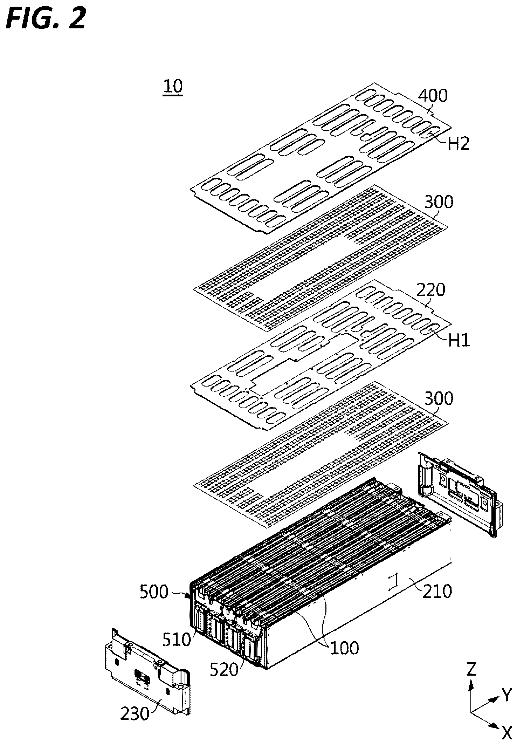

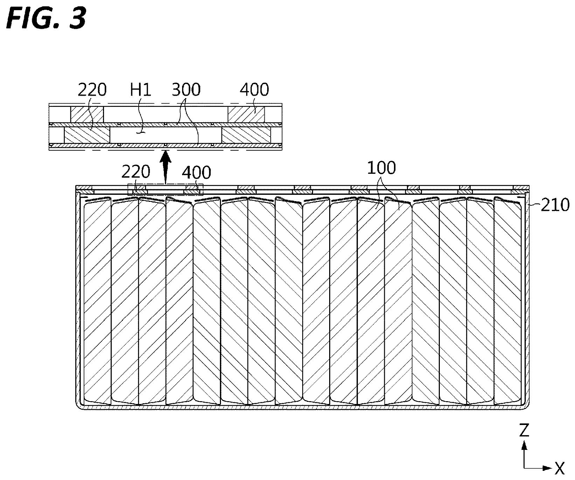

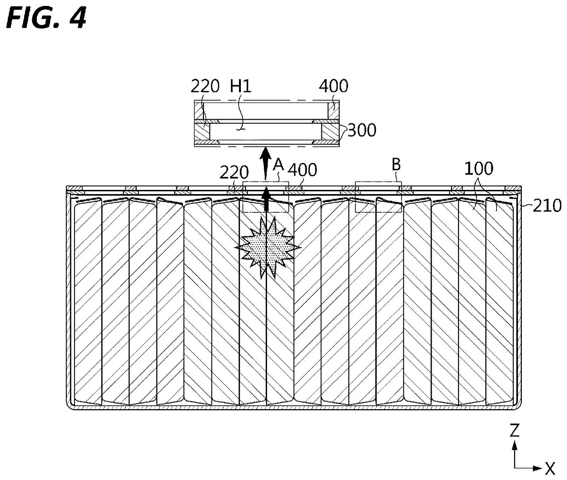

FIG. 1 is a schematic perspective view of a battery module according to one embodiment of the present disclosure, and FIG. 2 is an exploded perspective view of the battery module according to one embodiment of the present disclosure. Also, FIG. 3 is a cross-sectional view of the battery module according to one embodiment of the present disclosure. Then, FIG. 4 is a view illustrating that at least a part of a rupture member is opened when a thermal event occurs in the battery module according to one embodiment of the present disclosure.

Referring to FIGS. 1 to 4, a battery module 10 according to one embodiment of the present disclosure may include a battery cell 100, a module casing 200 and a rupture member 300.

Referring to FIG. 2, a plurality of battery cells 100 may be included. Then, the battery cells 100 may be, for example, pouch-type secondary batteries. Each of the battery cells 100 may include an electrode assembly, a cell casing that accommodates the electrode assembly, and an electrode lead connected to the electrode assembly and led to the outside of the cell casing to function as an electrode terminal. The electrode assembly may be accommodated in a receiving portion of the cell casing, and edges around the receiving portion may be thermally fused to form a sealing portion.

As illustrated in FIG. 2, etc. the battery cells 100 may be arranged side by side in the left-right direction (*e.g*., X-axis direction) while standing in the vertical direction (*e.g.,* Z-axis direction). Here, the sealing portion of each battery cell 100 may face forward and backward (*e.g.,* Y-axis direction), and up and down (*e.g.,* Z-axis direction), and the receiving portion may face left and right (*e.g*., X-axis direction).

The present disclosure is not limited by specific types or shapes of such a battery cell 100, and various battery cells 100 known at the time of application of the present disclosure may be employed to constitute the plurality of battery cells 100 of the present disclosure. In the present embodiment, an easily stackable pouch-type secondary battery with high energy density is targeted as illustrated in the drawings, but it goes without saying that a cylindrical or prismatic secondary battery can be applied as the battery cell 100.

Meanwhile, referring to FIGS. 1 and 2, the module casing 200 may be configured to accommodate the battery cells 100. In the configuration of the module casing 200, an inner space is formed, and the battery cells 100 are accommodated in the inner space.

The module casing 200 may be made of a metal material having rigidity and heat resistance to physically or chemically protect the accommodated battery cells 100.

A first venting hole H1 may be formed in the module casing 200. The first venting hole H1 may be formed on one side surface of the module casing 200. The first venting hole H1 may be configured to discharge venting gas generated from the battery cell 100, to the outside of the module casing 200. Directional venting in one direction may be possible by the first venting hole H1.

As an example, as illustrated in FIGS. 1 to 4, the first venting hole H1 is formed on the upper surface of the module casing 200, and directional venting may be possible toward the top side of the battery module 10 through the first venting hole H1.

A plurality of first venting holes H1 may be provided, and the first venting holes H1 may be provided at regular intervals therebetween in the horizontal direction (*e.g*., X-axis and Y-axis directions).

According to the above embodiment of the present disclosure, in a situation where a thermal runaway occurs and gas, etc. are generated in any one of the battery cells 100, it is possible to quickly perform directional venting of the gas, etc. in a specific direction.

Meanwhile, referring to FIGS. 3 and 4, the rupture member 300 may be provided on one side surface of the module casing 200 where the first venting holes H1 are formed. The rupture member 300 may be coupled to the module casing 200 to cover the first venting holes H1 from both sides. For example, as illustrated in FIGS. 1 to 4, the first venting holes H1 are formed on the upper surface of the module casing 200, and the rupture member 300 may be coupled to upper and lower portions of the upper surface of the module casing 200. That is, the rupture member 300 may be configured as a double structure.

The rupture member 300 may be made of a material with excellent performance of heat resistance and/or fire resistance, for example, mica sheet. Then, even when high-temperature heat is generated, shrinkage does not occur, and thus the shape stability of the rupture member 300 may be maintained. Thus, it is possible to stably block high-temperature gas, flame, and the like, generated from the battery cells 100.

The rupture member 300 may be configured such that at least a part thereof may be ruptured by venting gas generated from the battery cells 100. For example, at least a part of the rupture member 300 may be ruptured by the pressure or heat of the venting gas directed toward the first venting holes H1. As a result, when a thermal event occurs in a specific battery cell 100, the rupture member 300 provided on one side of the specific battery cell 100 may be ruptured and at least one of the first venting holes H1 may be opened. Accordingly, the venting gas, and the like, may be discharged to the outside of the module casing 200 through the open first venting hole H1.

Referring to FIGS. 3 and 4, as in the embodiment illustrated in FIG. 3, in a normal state, the rupture member 300 covers the first venting holes H1 of the module casing 200 to protect the battery cells 100 inside the module casing 200. However, as in the embodiment illustrated in FIG. 4, when a thermal event in which a venting gas or flame is generated occurs in some battery cells 100, at least a part of the rupture member 300 may be ruptured to open at least a part of the first venting holes H1 (see e.g., the part A in FIG. 4). Accordingly, according to the above embodiment of the present disclosure, since at least a part of the rupture member 300 is ruptured and the first venting holes H1 are exposed to the outside of the battery module 10, the first venting holes H1 are not shielded. As a result, gas, flame, and the like, may be completely discharged to the outside of the battery module 10.

Also, the rupture member 300 may prevent gas or flame discharged to the outside of the module casing 200 from flowing back into the battery module 10. That is, the rupture member 300 provided on the battery cell 100 side where no thermal event has occurred is not ruptured and can maintain its state where it covers the first venting holes H1 (see, *e.g.,* the part B in FIG. 4).

As a result, the venting gas, flame, etc. discharged to the outside through the open first venting hole H1 can be fundamentally blocked from flowing back into the battery module 10. Also, the rupture member 300 of the remaining portion that has not been ruptured may block not only heat but also high-temperature gas, flame, discharged matter, etc. generated from the battery cell 100.

According to the above embodiment of the present disclosure, when a thermal runaway occurs in the battery module 10, not only can the venting gas or flame generated inside the battery module 10 be smoothly discharged to the outside of the battery module 10, but also the discharged venting gas or flame can be prevented from flowing back into the battery module 10. Therefore, the safety and reliability of the battery module 10 may be increased because thermal propagation to neighboring battery cells 100 may be minimized and thus thermal runaway propagation may be effectively prevented, suppressed, or delayed.

Meanwhile, referring to FIG. 2, the module casing 200 may include a case body 210. For example, the case body 210 may be provided as a U-frame. When the case body 210 is provided as a U-frame, the case body 210 may be provided to cover both side surfaces and the bottom surface of the plurality of battery cells 100. The case body 210 may include a left plate and a right plate which cover both side surfaces of the plurality of battery cells 100, and a lower plate that covers the bottom surface of the plurality of battery cells 100. Then, the left plate, the right plate and the lower plate may be configured as an integrated form. Here, the top side and the front and rear sides of the case body 210 may be open. This case body 210 may be made of a metal material having rigidity and heat resistance to physically or chemically protect the accommodated battery cells 100.

Here, the module casing 200 may further include a top plate 220. The top plate 220 may be provided to form the upper surface of the module casing 200. The top plate 220 may be coupled to the open top side of the case body 210. The top plate 220 and the case body 210 may be coupled to each other through welding. Here, the shape in which the top plate 220 and the case body 210 are coupled may be a rectangular tubular shape with open front and rear sides.

As in the embodiment illustrated in FIGS. 1 to 4, the first venting holes H1 may be formed in the top plate 220. Thus, directional venting toward the top side of the battery module 10 may be possible through the first venting holes H1. Also, the rupture member 300 may be coupled to the top plate 220 to cover the first venting holes H1 of the top plate 220 from the upper and lower sides.

Meanwhile, the module casing 200 may include end plates 230 provided on the open front and rear sides of the case body 210. The end plate 230 may be coupled to the case body 210 through welding. Meanwhile, although not illustrated for convenience, the inside of the end plate 230 may be made of, for example, an insulating material and the outside may be made of a metal material. Also, in a part of the end plate 230, holes or slits may be formed to expose components that need to be exposed to the outside, such as a cathode terminal and an anode terminal or a connector of the battery module 10.

Further, the module casing 200 may be formed in various other forms. For example, the module casing 200 may include a box-shaped lower case having an upper open end and an upper cover that closes the upper open end of this lower case. Here, the lower case may also be provided as a form in which left and right plates covering both side surfaces of the plurality of battery cells 100 and front and rear plates covering front and rear surfaces of the plurality of battery cells 100 are integrated together.

Alternatively, the module casing 200 may be provided as a mono frame. For example, the case body 210 may be configured as a rectangular tubular shape having an upper surface, a bottom surface, a left surface and a right surface, and open front and rear sides.

Meanwhile, referring to FIG. 2, the battery module 10 of the present disclosure may further include a busbar frame assembly 500. The busbar frame assembly 500 may be provided inside the module casing 200 and configured to cover at least one side of the plurality of battery cells 100. In the present embodiment, as illustrated in FIG. 2, the busbar frame assembly 500 may be coupled to the front and rear sides of the plurality of battery cells 100.

The busbar frame assembly 500 may include a busbar frame 510 and a plurality of busbars 520. The busbar frame 510 may be provided to be coupled to approximately the front and rear sides of the plurality of battery cells 100. The busbar frame 510 may have slits through which the electrode leads of the battery cells 100 can be led in the front-rear direction.

Also, the busbar frame 510 may be made of a material having electrical insulation such as, for example, a plastic material, and may have a configuration in which the busbars 520 can be attached to the outer surface.

Meanwhile, the busbars 520, which are means for connecting the battery cells 100 in series and/or in parallel, are made of a metal material such as, for example, copper, aluminum, or nickel, and may be provided in rod shapes.

The electrode leads of the battery cells 100 are led to the outside of the busbar frame 510 through the slits of the busbar frame 510, and such drawn portions may be attached to the surfaces of the busbars 520 by a method such as welding.

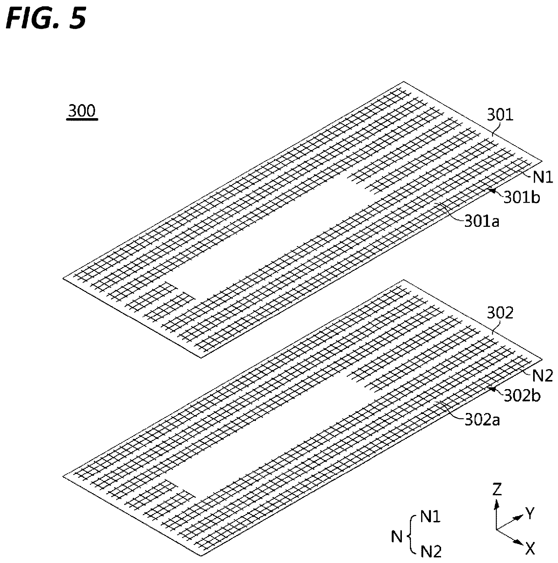

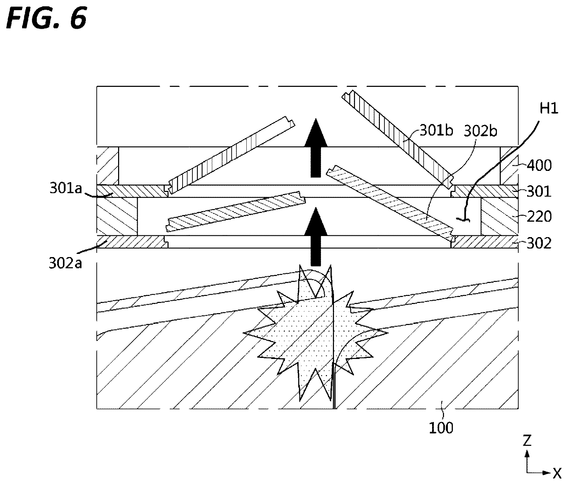

FIG. 5 is a perspective view of the rupture member included in the battery module according to one embodiment of the present disclosure. Also, FIG. 6 is a view of the A part of FIG. 4 in an enlarged scale, which illustrates the rupture member provided above the battery cell where a thermal event has occurred in the battery module according to one embodiment of the present disclosure.

Referring to FIGS. 5 and 6, the rupture member 300 may be configured as a double structure. For example, the rupture member 300 may include an outer member 301 and an inner member 302. The outer member 301 may be configured to cover the first venting holes H1 from the outside. Also, the inner member 302 may be configured to cover the first venting holes H1 from the inside.

According to one embodiment, the inner member 302 and the outer member 301 covering the first venting holes H1 may be ruptured by venting gas, flame, etc. generated from any battery cell 100, so that the first venting hole H1 may be opened.

According to the above embodiment of the present disclosure, since the rupture member 300 has a double structure, the rupture member 300 may be prevented from being easily damaged due to the external pressure. Also, since the first venting holes H1 are suppressed from being easily opened, internal components of the battery module 10 may be prevented from being damaged through the first venting holes H1. Therefore, the structural stability of the battery module 10 may be secured.

Also, the rupture member 300 may be configured in a sheet shape. For example, each of the outer member 301 and the inner member 302 may be configured in a sheet shape. The outer member 301 and the inner member 302 may be configured to have very thin thicknesses. Also, the outer member 301 and the inner member 302 may be configured to correspond to the size or shape of the top plate 220, on one side surface of the module casing 200 where the first venting holes H1 are formed, for example, as in the embodiment illustrated in the drawing.

According to the above embodiment of the present disclosure, the outer member 301 and the inner member 302 may be smoothly and quickly ruptured due to venting gas, flame, etc. generated from any battery cell 100. Accordingly, directional venting may be quickly performed through the first venting hole H1.

The rupture member 300 may be configured to at least partially adhere to one side surface of the module casing. For example, the rupture member 300 may be attached to the module casing 200 by an adhesive member. The adhesive member may include an adhesive, an adhesive tape, etc.

Also, the rupture member 300 may include main body portions 301a and 302a configured to at least partially adhere to one side surface of the module casing 200. The main body portions 301a and 302a may be attached to at least one part of one side surface of the module casing 200 except for the first venting holes H1. For example, the main body portions 301a and 302a may be attached to the top plate 220 in all portions except for the first venting holes H1 by an adhesive member.

Here, the outer member 301 and the inner member 302 may include the outer main body portion 301a and the inner main body portion 302a, respectively. As in the embodiment illustrated in FIG. 6, the lower surface of the outer main body portion 301a may adhere to the upper surface of the top plate 220, and the upper surface of the inner main body portion 302a may adhere to the lower surface of the top plate 220.

Referring to FIG. 5 and FIG. 6, the rupture member 300 may include opening portions 301b and 302b configured to be ruptured by venting gas, etc. when a thermal event occurs. The opening portions 301b and 302b may be provided in local portions that are planned in advance, such as, for example, hole shapes. A plurality of opening portions 301b and a plurality of opening portions 302b may be provided. For example, the opening portions 301b and 302b may be formed at locations corresponding to the first venting holes H1.

Only the opening portions 301b and 302b provided above the battery cell 100 where the thermal event has occurred may be ruptured. Accordingly, venting gas or flame may be discharged to the outside through the first venting hole H1 corresponding to the ruptured opening portions 301b and 302b.

According to the above embodiment of the present disclosure, when a thermal event occurs, the gas, flame, etc. generated within the battery module 10 may be discharged to the outside of the module casing 200 via the ruptured opening portions 301b and 302b.

Also, referring to FIG. 5 and FIG. 6, the outer member 301 and the inner member 302 may include the outer opening portion 301b and the inner opening portion 302b, respectively, which are configured to be ruptured by venting gas. The outer opening portions 301b may be configured to normally cover the first venting holes H1 from the outside of the first venting holes H1, and to be ruptured by venting gas, etc. Also, the inner opening portions 302b may be configured to normally cover the first venting holes H1 from the inside of the first venting holes H1, and to be ruptured by venting gas, etc.

Also, the opening portions 301b and 302b may include notches N configured to have thin thicknesses. As for the notches N, grooves may be formed by broken lines or solid lines in a part of the opening portions 301b, and 302b. The notches N may be provided to be weaker than adjacent areas and may be configured to be easily ruptured by pressure or heat of venting gas. In another embodiment, the opening portions 301b and 302b may be provided in the same shape and size as the first venting holes H1, and the notches N may also be formed along the circumferences of the first venting holes H1.

According to the above embodiment of the present disclosure, since the rupture member 300 is ruptured and opened by the notches N, a separate space is unnecessary when the rupture member 300 is ruptured. Thus, even when another structure is provided outside the battery module 10, the rupture member 300 may be smoothly opened.

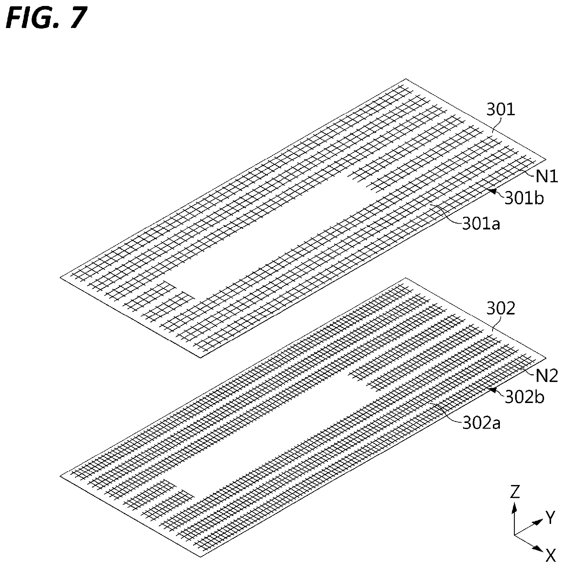

FIG. 7 is a perspective view of a rupture member included in a battery module according to another embodiment of the present disclosure.

The outer opening portion 301b and the inner opening portion 302b may be configured to have different thresholds at which rupturing is caused by venting gas. That is, the degrees to which the outer opening portion 301b and the inner opening portion 302b are ruptured by venting gas may be differently configured.

Referring to FIG. 5 and FIG. 7, the outer opening portion 301b and the inner opening portion 302b may include an outer notch N1 and an inner notch N2, respectively. Here, the outer notch N1 and the inner notch N2 may be configured to have different notching intervals, depths, etc.

In one embodiment, when a thermal event occurs in the battery cell 100, the threshold at which the outer opening portion 301b is ruptured may be configured to be higher than the threshold at which the inner opening portion 302b is ruptured. In this case, the inner opening portion 302b may be configured to be more easily ruptured than the outer opening portion 301b.

For example, as in the embodiment illustrated in FIG. 7, intervals between the inner notches N2 may be configured to be tighter than those of the outer notches N1. Alternatively, the depth of the inner notch N2 may be configured to be deeper than that of the outer notch N1.

As in the above embodiment of the present disclosure, in a case where the inner opening portion 302b is configured to be more easily ruptured than the outer opening portion 301b, when a thermal event occurs in any battery cell 100, although the outer opening portion 301b is not opened, the inner opening portion 302b may be reliably ruptured. Thus, venting gas, flame, etc. may be smoothly discharged to the outside.

Also, on another battery cell 100 side where no thermal event has occurred, even when the inner opening portion 302b is ruptured by the pressure of venting gas, the outer opening portion 301b is prevented from being ruptured. Thus, the re-inflowing of venting gas, flame, etc. toward another battery cell 100 may be suppressed or blocked.

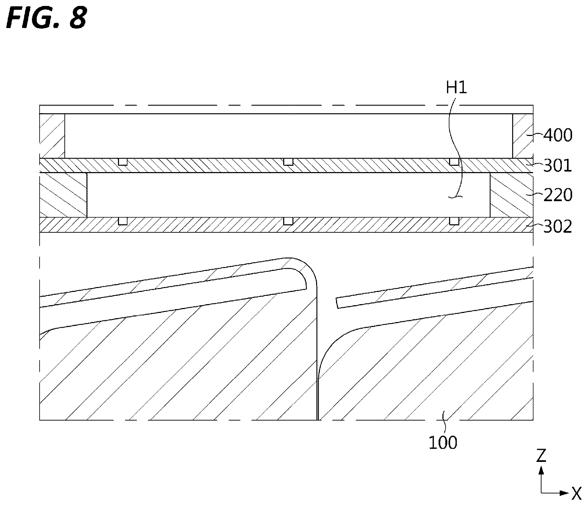

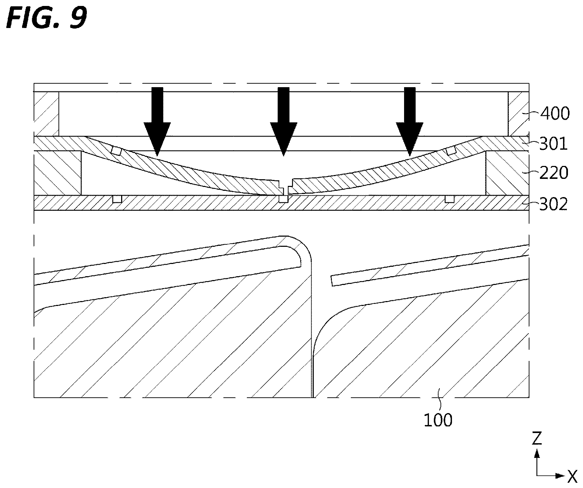

FIG. 8 and FIG. 9 are views of the B part of FIG. 4 in an enlarged scale, which illustrate the rupture member provided above the battery cell where no thermal event has occurred in the battery module according to one embodiment of the present disclosure.

The outer member 301 and the inner member 302 may be configured to be at least partially separated from each other. For example, as in the embodiment illustrated in FIG. 8, the outer member 301 and the inner member 302 may be configured to be coupled to both sides of the top plate 220, and to be spaced apart from each other at the portion where the first venting holes H1 are located. Accordingly, an air insulation layer may be formed in an space between the outer member 301 and the inner member 302.

As described above, when venting occurs in any battery cell 100, among the opening portions 301b and 302b, only the opening portions 301b and 302b provided above the battery cell 100 in which the venting has occurred may be ruptured. Also, as illustrated in FIG. 8 and FIG. 9, it is possible to maintain the state where the first venting holes H1 are covered by the plurality of opening portions 301b and 302b excluding the ruptured opening portions 301b and 302b.

Here, according to the above embodiment of the present disclosure, as an air insulation layer is formed in a space between the outer member 301 and the inner member 302 in a portion where the covering state of the first venting holes H1 is still maintained, the venting gas or flame discharged through the ruptured opening portions 301b and 302b may be effectively prevented from flowing back into the module casing 200.

Also, according to the above embodiment of the present disclosure, as in the embodiment illustrated in FIG. 9, even when the outer member 301 is ruptured by venting gas, flame, etc. which are about to be reversely introduced, the inner member 302 may be supported by the battery cells 100 and may not be easily ruptured. As a result, it is possible to block the reverse inflow of venting gas, flame, etc. from the outside. That is, according to the above embodiment of the present disclosure, the thermal propagation between the battery cells 100 may be suppressed, and also the structural stability of the battery module 10 may be secured.

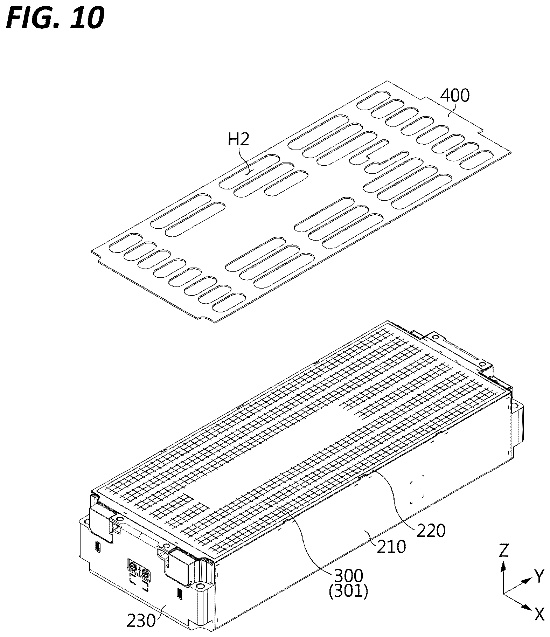

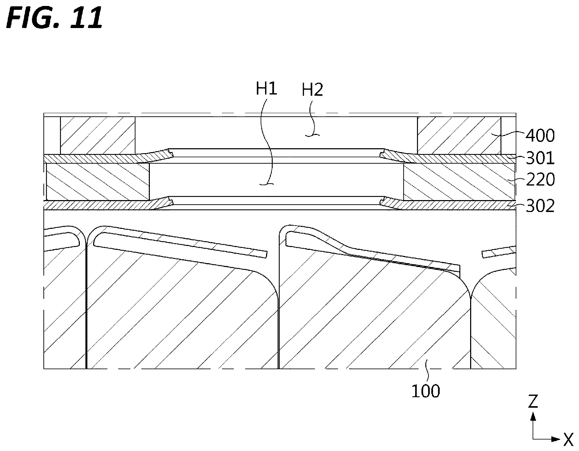

FIG. 10 and FIG. 11 are views for explaining a fixing cover of the battery module according to one embodiment of the present disclosure.

The battery module 10 according to one embodiment of the present disclosure may further include a fixing cover 400. The fixing cover 400 may be configured to fix the rupture member 300 to the module casing 200. Also, the fixing cover 400 may be provided outside the rupture member 300. For example, the fixing cover 400 may be provided outside the outer member 301. The fixing cover 400 may be coupled from the outside of the module casing 200 so as to apply pressure from the outside of the rupture member 300 toward the module casing 200. As an example, the fixing cover 400 may be configured to adhere to the outer surface of the rupture member 300 by an adhesive member.

As illustrated in FIG 11, when a thermal runaway occurs in the battery module 10, the bonding force between the module casing 200 and the rupture member 300 may be reduced, and the rupture member 300 may be lifted due to the pressure of the venting gas discharged from the battery cell 100 and/or the high-temperature heat of flame, and the like. When the rupture member 300, for example, a part of the outer member 301, remains lifted outside the module casing 200, not only will the discharge of the venting gas or flame be hindered, but there is also a risk that the venting gas or flame will penetrate into the raised interface between the rupture member 300 and the module casing 200, and the venting gas or flame may flow back into the battery module 10. However, according to the above embodiment of the present disclosure, since due to the fixing cover 400, the rupture member 300 is prevented from being lifted, the gas or flame discharged to the outside may be fundamentally blocked from flowing back into the battery module 10.

Meanwhile, the fixing cover 400 may be provided as, for example, a pad in which materials having excellent performance in heat resistance and/or fire resistance, for example, mica and silicon, are combined. Accordingly, even when high-temperature heat is generated, shrinkage does not occur, so that the shape stability of the fixing cover 400 may be maintained. Thus, the rupture member 300 may be firmly fixed to the module casing 200.

Then, a second venting hole H2 may be formed in the fixing cover 400. The second venting hole H2 may be configured to discharge venting gas discharged through the first venting hole H1, to the outside of the battery module 10.

A plurality of second venting holes H2 may be provided, and the second venting holes H2 may be provided at regular intervals therebetween in the horizontal direction (*e.g.*, X-axis and Y-axis directions). For example, the second venting holes H2 may be formed at locations corresponding to the first venting holes H1. That is, the first venting holes H1, the opening portions 301b and 302b, and the second venting holes H2 may be sequentially arranged from the inner side in the outward direction.

According to the embodiment of the present disclosure discussed above, when a thermal event occurs in any battery cell 100, the opening portions 301b, and 302b of the inner member 302 and the outer member 301 are ruptured by venting gas, flame, and the like, and thus, the first venting hole H1 may be opened. Also, the venting gas, flame, and the like, discharged to the outside via the first venting hole H1 may be completely discharged to the outside of the battery module 10 via the second venting hole H2 formed at a location corresponding to the first venting hole H1.

Therefore, according to the embodiment of the present disclosure discussed above, in a situation where any one of the battery cells 100 undergoes thermal runaway and generates gas, and the like, it is possible to quickly perform a directional venting of the venting gas, and the like, in a specific direction.

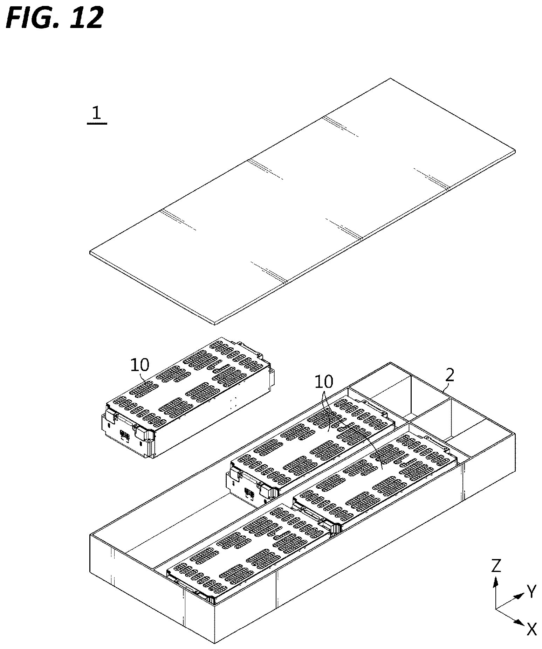

FIG. 12 is a schematic perspective view of a battery pack including the battery module according to one embodiment of the present disclosure.

Referring to FIG. 12, a battery pack 1 according to one embodiment of the present disclosure may include one or more battery modules 10 according to one embodiment of the present disclosure as described above. The battery pack 1 according to the present disclosure may further include a pack case 2 for accommodating a battery management system (BMS) for integrally controlling charging/discharging of one or more battery modules, a current sensor, a fuse, etc. together with the above-described components.

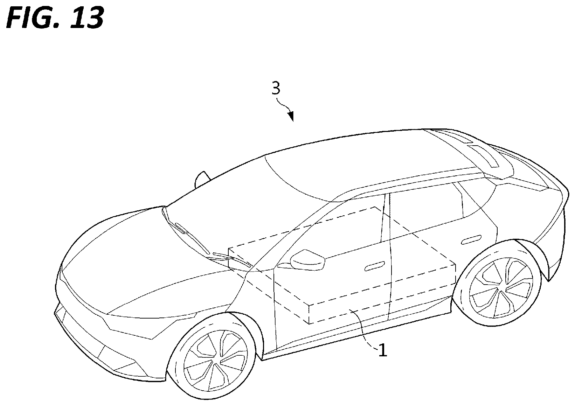

FIG. 13 is a schematic perspective view of a vehicle including the battery pack according to one embodiment of the present disclosure.

Referring to FIG. 13, a vehicle 3 according to one embodiment of the present disclosure may include one or more battery packs 1 according to one embodiment of the present disclosure or one or more battery modules 10 according to one embodiment of the present disclosure. The vehicle 3 according to the present disclosure may be, for example, an electric vehicle, a hybrid vehicle or a plug-in hybrid vehicle. The vehicle 3 includes a four-wheeled vehicle and a two-wheeled vehicle. The vehicle 3 operates when power is supplied from the battery pack 1 or the battery module 10 according to one embodiment of the present disclosure.

Although the present disclosure has been described above through limited embodiments and drawings, the present disclosure is not limited thereto, and it is obvious that various modifications and variations are possible within the scope of the technical idea of the present disclosure and the equivalent scope of the patent claims to be described below by an ordinary skill in the art to which the present disclosure belongs.

## Claims

1. A battery module comprising:
a plurality of battery cells;
a module casing configured to accommodate the plurality of battery cells, and having a first venting hole on one side surface, the first venting hole being configured to discharge venting gas to outside; and
a rupture member coupled to the module casing so as to cover the first venting hole from both sides, and configured to be at least partially ruptured by the venting gas.

2. The battery module according to claim 1, wherein the module casing includes:
a case body having an open top side and configured to allow the plurality of battery cells to be seated thereon; and
a top plate coupled to the open top side of the case body, in which the first venting hole is formed.

3. The battery module according to claim 1, wherein the rupture member includes:
an outer member configured to cover the first venting hole from outside; and
an inner member configured to cover the first venting hole from inside.

4. The battery module according to claim 1, wherein the rupture member is configured in a sheet shape.

5. The battery module according to claim 1, wherein the rupture member is configured to at least partially adhere to one side surface of the module casing.

6. The battery module according to claim 1, wherein the rupture member includes an opening portion formed at a location corresponding to the first venting hole, and configured to be ruptured by the venting gas.

7. The battery module according to claim 6, wherein the opening portion includes a notch configured to have a thin thickness.

8. The battery module according to claim 3, wherein the outer member and the inner member include an outer opening portion and an inner opening portion, respectively, which are configured to be ruptured by the venting gas, and
the outer opening portion and the inner opening portion are configured to have different thresholds at which rupturing is caused by the venting gas.

9. The battery module according to claim 3, wherein the outer member and the inner member are configured to be at least partially separated from each other.

10. The battery module according to claim 1, further comprising a fixing cover provided outside the rupture member and configured to fix the rupture member to the module casing.

11. The battery module according to claim 10, wherein in the fixing cover, a second venting hole is formed at a location corresponding to the first venting hole and is configured to discharge the venting gas to outside.

12. A battery pack comprising the battery module according to any one of claims 1 to 11.

13. A vehicle comprising the battery module according to any one of claims 1 to 11.
